(19) Europäisches Patentamt
European Patent Office
Office européen des brevets

(11) **EP 1 333 268 A2**

(12) **EUROPÄISCHE PATENTANMELDUNG**

(43) Veröffentlichungstag:
06.08.2003 Patentblatt 2003/32

(51) Int Cl.⁷: **G01M 7/02**

(21) Anmeldenummer: 03450014.0

(22) Anmeldetag: **15.01.2003**

(84) Benannte Vertragsstaaten:
**AT BE BG CH CY CZ DE DK EE ES FI FR GB GR HU IE IT LI LU MC NL PT SE SI SK TR**
Benannte Erstreckungsstaaten:
**AL LT LV MK RO**

(30) Priorität: **23.01.2002 AT 3502 U**

(71) Anmelder: **AVL List GmbH**
**8020 Graz (AT)**

(72) Erfinder: **Germann, Stefan**
**64653 Lorsch (DE)**

(74) Vertreter: **Pinter, Rudolf, Dipl.-Ing. et al**
**Patentanwalt,**
**Europäischer Patentvertreter,**
**Prinz-Eugen-Strasse 70**
**1040 Wien (AT)**

(54) **Verfahren und Vorrichtung zum Prüfen eines Fahrzeug-Antriebsstranges**

(57)    Zur aktiven Dämpfung von Mehrmassensystem-Schwingungen an Prüfständen für mindestens eine rotierende Komponente (J1, I, 1, 14, 16 - 19) von Fahrzeugantriebssträngen mit mindestens einem regelbaren Antriebs- und/oder Belastungsaggregat (J1, J2, J3) wird die durch die Schwingungen verursachte Relativbewegung der drehenden Massen den Antriebs- und Belastungsaggregaten (J1, J2, J3) als Korrekturmoment aufgeschaltet. Zur Bestimmung der Relativbewegung der drehenden Massen wird das differenzierte Signal (dM/dt) des an den Antriebs- und Belastungsaggregaten (J1, J2, J3) gemessen Drehmoments (M, M1, M2, M3) verwendet, welches mit einem Dämpfungsfaktor (d/c) multipliziert dem Drehmomentsollwert des jeweiligen Aggregates als Korrekturwert aufgeschaltet wird. Damit werden die speziell etwa bei Automatikgetrieben nicht bekannten bzw. sich während der Prüfung ändernden momentanen Übersetzungsverhältnisse zwischen den angekoppelten Aggregaten (J1, J2, J3) nicht benötigt, was einfache und vielseitige Prüfmöglichkeiten bietet.

FIG. 4

**Beschreibung**

Die Erfindung betrifft ein Verfahren zum Prüfen zumindest einer rotierenden Komponente eines Fahrzeug-Antriebsstranges auf einem Prüfstand, wobei die zu prüfende Komponente ein- und/oder abtriebsseitig mit je mindestens einem angekoppelten, aktiven und regelbaren Antriebs- und/oder Belastungsaggregat versehen ist, welche Aggregate zusammen mit den Elastizitäten und Massen der dazwischenliegenden Elemente ein schwingfähiges Mehrmassensystem bilden, zu dessen aktiver Dämpfung die durch die Schwingungen verursachten Relativverdrehungen der angekoppelten Aggregate zur Ermittlung von Korrekturmomenten herangezogen werden, welche den Aggregaten aufgeschaltet werden. Weiters betrifft die Erfindung auch eine Vorrichtung zur Durchführung eines derartigen Verfahrens, mit zumindest einer ein- und/oder abtriebsseitig mit je mindestens einem angekoppelten, aktiven und regelbaren Antriebs- und/oder Belastungsaggregat versehenen zu prüfenden Komponente und einer Korrektureinheit, welche eingangsseitig mit einer Meßanordnung zur Ermittlung der durch Mehrmassensystem-Schwingungen verursachten Relativverdrehungen der Aggregate verbunden ist und daraus Stellsignale für Korrekturmomente ermittelt, welche über eine ausgangsseitige Verbindung mit dem jeweiligen Aggregat diesem aufgeschaltet sind.

Speziell an Antriebsstrang-Prüfständen, bei denen die zu prüfenden Komponenten abweichend vom realen Fahrbetrieb zumindest abtriebsseitig anstelle von Rad bzw. Reifen und Fahrbahn (mit allen daraus resultierenden Momenten bzw. Momentenänderungen) über angekoppelte, aktive und regelbare Antriebs- und/oder Belastungsaggregate (unter "aktiven" Aggregaten sind hier bevorzugt solche zu verstehen, die sowohl generatorisch als auch motorisch arbeiten können; grundsätzlich ist für eine aktive Dämpfung im hier angesprochenen Sinne allerdings nur erforderlich, daß in jedem relevanten Betriebspunkt dem erzeugten Drehmoment sowohl ein positives als auch ein negatives Korrekturmoment überlagert werden kann. Es geht dabei um das Vorzeichen der Änderung des erzeugten Moments, nicht um das Vorzeichen des Moments selbst, weshalb zur Durchführung der aktiven Dämpfung vom Prinzip her auch Aggregate mit nur bremsender und nicht auch antreibender Wirkung geeignet sind, auch wenn z.B. mit einer Wasserbremse nur relativ langsame Änderungen möglich sind und daher nur entsprechend niederfrequente Schwingungen gedämpft werden können) belastet werden, kommt es sowohl in den klassischen Regelungsarten (Drehzahl/Drehmomentenregelung) wie auch im Simulationsbetrieb oft zu unrealistischen Drehschwingungen im Gesamtsystem zwischen den beidseitig angekoppelten Aggregaten, die sowohl in Frequenz wie auch Amplitude deutlich von denen im realen Fahrbetrieb abweichen. Dies gilt grundsätzlich für alle Prüfungstandskonfigurationen, von einfachen Motorprüfständen über sogenannte Powerpack-Prüfstände (Verbrennungskraftmaschine mit Getriebe) bis zu Allrad-Antriebsstrang-Prüfständen. Je nach Art der Antriebsmaschine (Verbrennungskraftmaschine, Drehstrom- oder Gleichstrommotoren als sogenannte Prime-Mover, oder dergleichen), des Massenträgheitsmomentes der Belastungsaggregate (elektrische Maschinen, Flüssigkeitsbremsen, Wirbelstrombremsen, Schwungmassen und dergleichen) und des mechanischen Aufbaus des gesamten Prüfsystems sind diese Schwingungen unterschiedlich schwach gedämpft und können damit im Zusammenhang mit der Regelung auch zu instabilen Zuständen am Prüfstand führen. Derartige Schwingungen können aber auch am reinen Motorprüfstand auftreten. Hier vorzugsweise am dynamischen Motorprüfstand, da die Wellenverbindung aus Dynamikgründen geringere mechanische Dämpfungseigenschaften hat, und drehsteifer ist als bei stationären Prüfständen.

Hauptsächliche Ursachen für diese Schwingungen sind:

- unterschiedliche angekoppelte Massenträgheitsmomente der Abtriebsaggregate bzw. der Eintriebsmaschinen am Prüfstand im Vergleich zum realen Fahrzeug
- fehlende dämpfende Elemente, wie z.B. der Reifen-Straße-Kontakt, am Prüfstand
- mehrere Einzelmassen an den Abtriebswellen im Vergleich zu einer gemeinsamen Fahrzeugmasse auf der Straße
- die gegenseitige Beeinflussung der einzelnen Regelkreise der Antriebs- und Belastungsaggregate untereinander

Versuche, diese für die zu prüfenden Komponenten in der Realität untypischen Schwingungen durch mechanische Dämpfungselemente am Prüfstand zu beseitigen waren bisher wenig erfolgreich.

Bekannt geworden sind auch Verfahren und Vorrichtungen zur aktiven Dämpfung derartiger Mehrmassensystem-Schwingungen an Antriebsstrang-Prüfständen mit elektrischen Maschinen als Ein- und Abtriebsaggregaten wie sie eingangs angesprochen sind (siehe dazu beispielsweise auch DE 38 12 824 A1 oder DE 38 08 524 C2). Es werden dabei unter Berücksichtigung der Übersetzungsverhältnisse im Antriebsstrang momentane Differenzdrehzahlen zwischen den Ein- und Abtriebsaggregaten gebildet, welche die durch die Mehrmassensystem-Schwingungen verursachten Relativverdrehungen der angekoppelten Aggregate repräsentieren. Diese Differenzdrehzahlen werden entsprechend korrigiert den jeweiligen Antrieben als Korrektur für den Momentensollwert aufgeschaltet, womit die unerwünschten Schwingungen gedämpft werden. Voraussetzung für derartige Verfahren ist aber, daß sowohl die Aggregatdrehzahl als auch das Übersetzungsverhältnis bekannt sein als auch mit ausreichend hoher Genauigkeit und Dynamik zur Verfügung stehen muß. Dies ist insbesonders bei neuen Getriebetypen, wie z.B. CVT-Getrieben, aber auch Automatikgetrieben, nicht der Fall - die Übersetzungen sind entweder nicht bekannt oder ändern sich dynamisch während Belastungsänderungen, womit diese bekannten Verfahren und Vorrichtungen der aktiven Dämpfung von Antriebsstrang-Prüfsystemen für neue Getriebetypen nicht geeignet sind.

Aufgabe der vorliegenden Erfindung ist es, die angesprochenen Nachteile des zuletzt erwähnten bekannten Verfahrens bzw. der zugehörigen Vorrichtung zu vermeiden und Verfahren und Vorrichtung der eingangs genannten Art so zu verbessern, daß es während des Prüfbetriebes zu keiner störenden Anregung der möglichen Mehrmassensystem-Schwingfrequenzen des Prüfsystems kommen kann. Diese Aufgabe soll auf möglichst einfache Weise unabhängig von den verwendeten Getriebetypen bzw. -übersetzungen gelöst werden.

Gemäß der vorliegenden Erfindung wird die gestellte Aufgabe bei einem Verfahren der eingangs genannten Art dadurch gelöst, daß zur Bestimmung der durch die Mehrmassensystem-Schwingungen verursachten Relativverdrehung der Aggregate das an bzw. in deren Verbindungswelle gemessene Drehmoment differenziert wird und daß dieses, die Verspannungsänderung darstellende differenzierte Signal mit einem Dämpfungsfaktor multipliziert und dem Drehmomentsollwert des jeweiligen Aggregates als Korrekturwert aufgeschaltet wird. Bei einer Vorrichtung der eingangs genannten Art besteht die Lösung der gestellten Aufgabe gemäß der vorliegenden Erfindung darin, daß die Meßanordnung zur Ermittlung der Relativverdrehung einen Drehmomentsensor an bzw. in der Verbindungswelle des jeweiligen Aggregates aufweist, welcher mit einer Differenziereinheit in der Korrektureinheit zur Ermittlung der Verspannungsänderung in Verbindung steht, welche in einer Multiplikationseinheit der Korrektureinheit mit einem Dämpfungsfaktor korrigiert wird und als Stellsignal für das Korrekturmoment dient.

Mit den beschriebenen erfindungsgemäßen Maßnahmen kann eine aktive Dämpfung der angesprochenen Mehrmassensystem-Schwingungen ohne Information über das tatsächliche Übersetzungsverhältnis im Antriebsstrang bzw. zwischen den ein- und abtriebsseitig angekoppelten Aggregaten und auch ohne den Drehzahlistwert der Antriebsmaschine (der beispielsweise bei Verbrennungsmotoren nicht immer verfügbar ist) realisiert werden. Grundsätzliche Basis ist das an der An- bzw. Abtriebswelle zwischen zu prüfender Komponente und Antriebs- bzw. Belastungsaggregat (vorzugsweise im Bereich der Ankoppelung) gemessene Drehmoment, welches beispielsweise mittels einer üblichen Momentenmeßwelle, aber auch mittels jeder anderen dazu geeigneten Vorrichtung (wie etwa einem Momentenmeßflansch oder auch einem zum elektrischen Aggregat gehörigen Drehmomentrechner) bestimmt werden kann. Das dem jeweiligen Aggregat dann aufzuschaltende Korrekturmoment wird aus der zeitlichen Änderung der gemessenen Verspannung ermittelt. Der Begriff Verspannung resultiert dabei aus der Vorstellung, die Welle sei eine Torsionsfeder mit bestimmter Drehsteifigkeit, deren meßbares Verspannungsmoment proportional zur Federkonstante und zum Verdrehwinkel ist. Die Federkonstante ist dabei durch die Torsionssteifigkeit der Welle vorgegeben. Das Korrekturmoment wird dann nach folgender Gleichung bestimmt, wobei als Dämpfungskonstante der regelungstechnisch zu nutzende Parameter bezeichnet ist.

$$M_{dämpfend} = \frac{dM \text{ gemessen}}{dt} \times \frac{\text{Dämpfungskonstante (d)}}{\text{Federkonstante (c)}}$$

Die beiden mit der zeitlichen Änderung des gemessenen Wellenmoments wie oben angeführt zu verknüpfenden Konstanten können natürlich auch zu einem Parameter zusammengefaßt werden, der dann eine systemabhängige und zweckmäßiger Weise in einer Initialisierungsphase zu bestimmende Konstante ist, die auch als Dämpfungsfaktor angesprochen werden kann.

Das auf diese Weise ermittelte dämpfende Korrekturmoment wird dem Aggregat rückgeführt bzw. aufgeschaltet, dessen Wellenmomentistwert zur Bestimmung des Korrekturmomentes verwendet wurde, womit problemlos auch bei Mehrmaschinen-Prüfständen (beispielsweise zur Prüfung des kompletten Antriebsstranges eines allradgetriebenen Fahrzeuges) die erwünschte Dämpfung bzw. Ausschaltung der angesprochenen Mehrmassensystem-Schwingungen vorgenommen werden kann. Prinzipiell kann dabei jede aktive (eine gegenüber einem momentanen mittleren Drehmoment positive und/oder negative Drehmomentänderung erzeugende) Maschine des Gesamtsystems zur Erzeugung eines dämpfenden Korrekturmomentes verwendet werden, soferne sie nur separat ansteuerbar und damit in einen entsprechenden Regelkreis einbindbar ist. Praktisch kommen allerdings nur Aggregate in Frage, die zusammen mit der Regelstrecke schnell genug sind, die Systemschwingungen mit nur geringer Phasenverschiebung bedämpfen zu können. Bei den angesprochenen Mehrmassensystem-Schwingungen handelt es sich um schwach gedämpfte Eigenfrequenzschwingungen des Gesamtsystems im Bereich von etwa 3 bis etwa 10 Hz, die durch jegliche Momenten- oder Drehzahländerungen angeregt werden können und dabei zusammen mit der Regelung zu stabilen bis instabilen Schwingungen der genannten Art eskalieren können. Diese Schwingungen entstehen immer durch Relativbewegungen zweier über ein Torsionsfedersystem verbundener Massen (wie sie die angekoppelten Aggregate darstellen) wobei bei mehreren Massen normalerweise auch mehrere Schwingungen mit unterschiedlichen Frequenzen, Phasenlagen und Amplituden überlagert sind.

Im Hinblick auf die erforderliche rasche Reaktion der angekoppelten Antriebs- und Belastungsaggregate kommen bevorzugt Gleichstromantriebe, moderne Drehstromantriebe oder schnelle Hydraulikmotoren in Frage, die zur Erzeugung einer Grundlast aber auch mit einer relativ trägeren Einheit, wie etwa einer Wasserbremse, kombiniert sein können. Die Auswahl richtet sich dabei nach vielen Kriterien, wie etwa Preis, Lastbereich, erforderliche Dynamik usw. - grundsätzlich muß aber natürlich immer eine Eingriffsmöglichkeit für die Regelung gegeben sein. Die Aufschaltung des Korrekturmomentes zum Sollmoment des jeweiligen Aggregates kann über die Hardware (beispielsweise analog - elektronisch falls geringste Totzeiten einzuhalten sind) oder per Software, mit entsprechend schnellen und leistungsfähigen Prozessoren, erfolgen.

Unter der zu prüfenden Komponente ist jede rotierende Antriebsstrangkomponente bzw. auch eine Kombination mehrerer derartiger Komponenten zu verstehen, also beispielsweise der Verbrennungsmotor, das Getriebe, die Kupplung, das Differenzial, die Kardanwelle oder ähnliche derartige Elemente in beliebiger interessierender Kombination. Obwohl die beschrieben Lösung nach der vorliegenden Erfindung besondere Vorzüge im Zusammenhang mit den nicht benötigten Übersetzungsverhältnissen (also im Zusammenhang beispielsweise mit Getrieben mit variabler Übersetzung) hat, hat sie auch Vorteile gegenüber dem beschriebenen Stand der Technik bei fixen bzw. bekannten Übersetzungsverhältnissen oder auch nicht vorhandenen Getrieben. Wesentlich ist nur, daß es mindestens zwei drehverbundene Massen gibt, die mit einer Torsionsfeder (Welle) miteinander verbunden sind, was auch bereits auf den einfachen Motorenprüfstand zutrifft, bei dem der Verbrennungsmotor selbst eine dieser Massen darstellt.

Das eingangs zum Stande der Technik angesprochene Drehzahldifferenz-Verfahren zur aktiven Dämpfung von Mehrmassensystem-Schwingungen ermöglicht eine Bestimmung des Korrekturmomentes aus relativ einfach, billig und robust zu ermittelnden Drehzahlen. Nachteiligerweise sind aber gerade diese Drehzahlsignale nicht an beliebigen Stellen des Prüfaufbaus ermittelbar, weshalb man dann an unter Umständen baulich weiter entfernt liegenden Stellen die Drehzahlen aufnehmen muß, was damit aber eine zusätzliche Berücksichtigung der nicht immer konstanten oder bekannten Übersetzungsverhältnisse erfordert und über die Torsionssteifigkeit der zusätzlichen Übertragungsstrecke auch weitere störende Einflüsse haben kann. Demgegenüber werden gemäß der vorliegenden Erfindung Drehmomentsensoren zur Messung der Verspannung in der jeweiligen Welle verwendet, womit man von den erwähnten Schwierigkeiten unabhängig wird. Vorteilhaft ist insbesondere die Definiertheit der Meßgröße (ohne störenden Einfluß verteilter Torsionssteifigkeiten und Massen) und die Unabhängigkeit von Übersetzungsverhältnissen und von in machen Fällen schwer zugänglichen Drehzahlen.

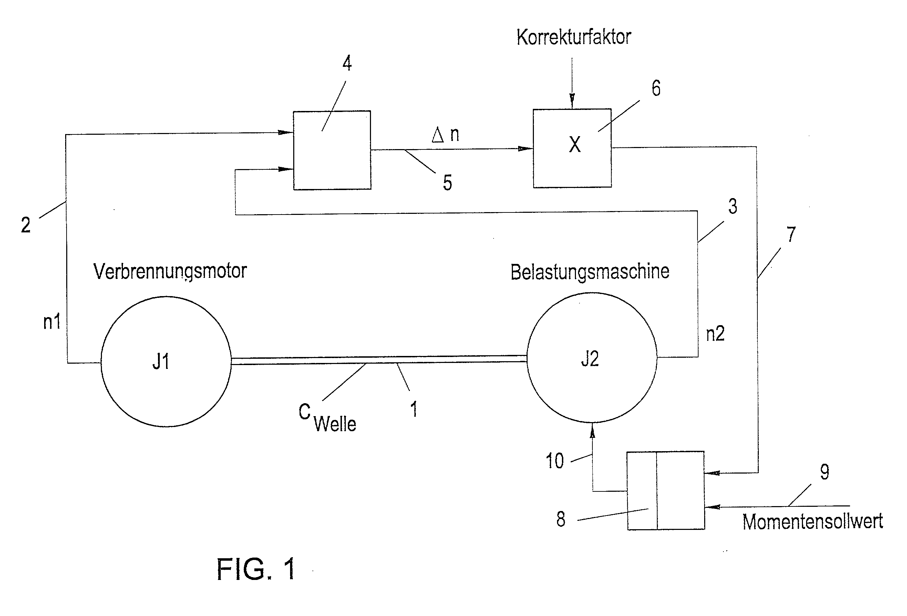

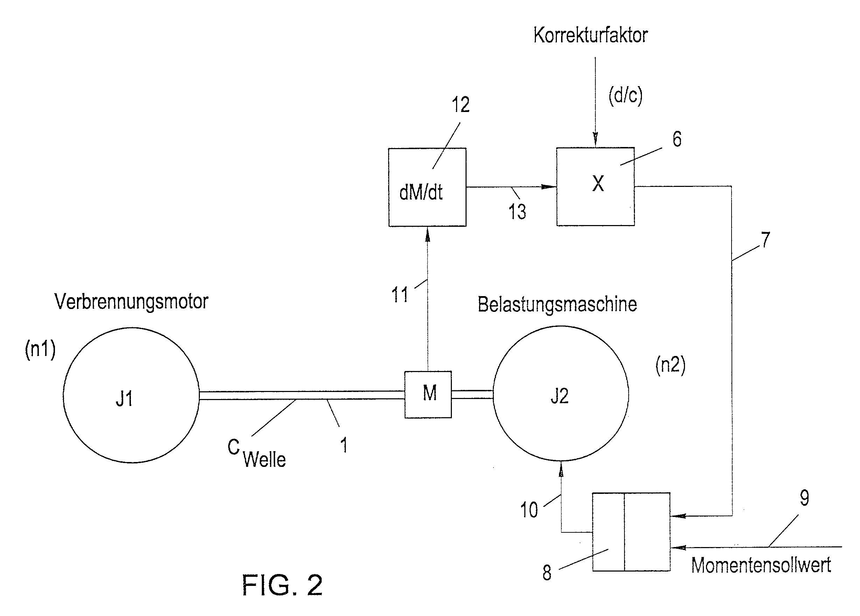

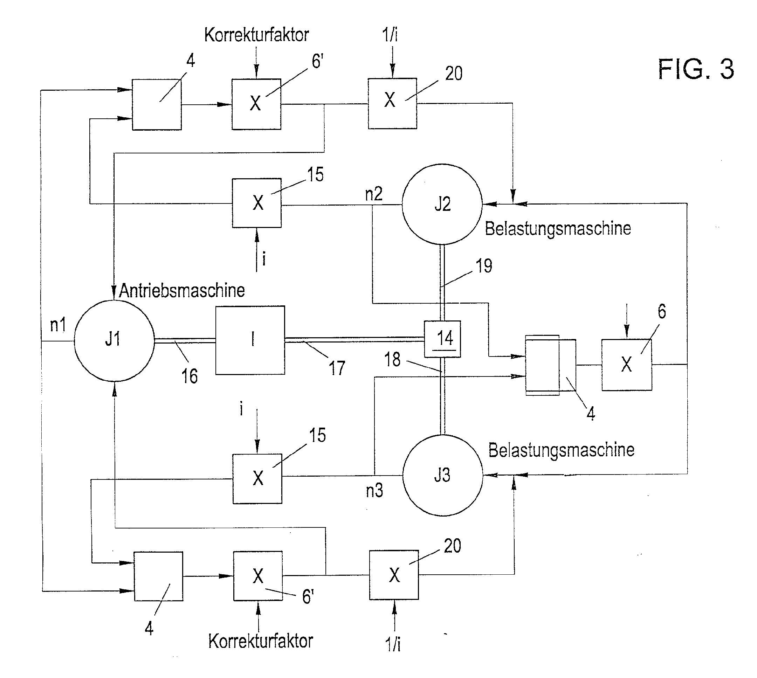

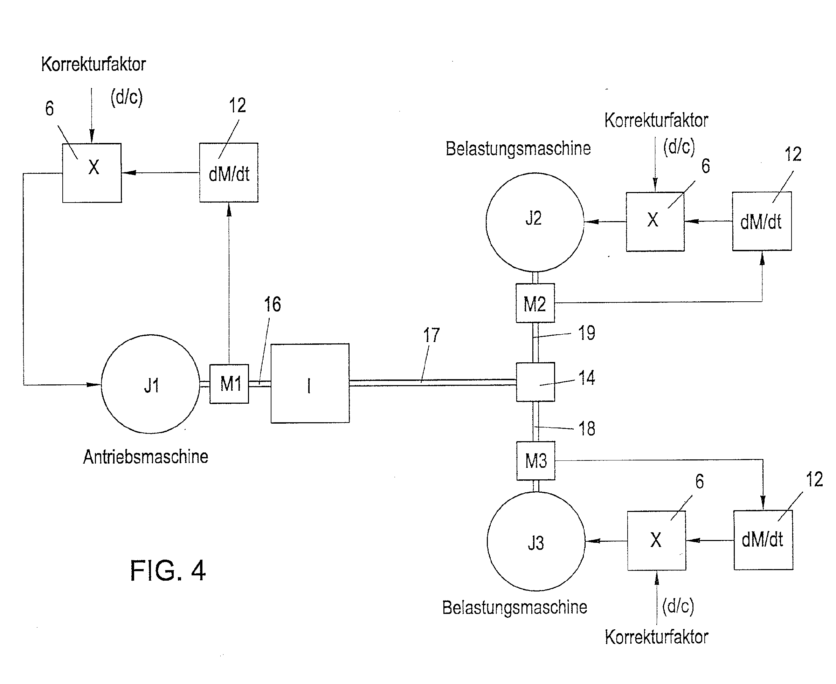

Die Erfindung wird im folgenden noch anhand der schematischen Zeichnungen näher erläutert. Fig. 1 und 3 zeigen dabei Prüfstände mit aktiver Dämpfung von uncharakteristischen Mehrmassensystem-Schwingungen nach dem Stande der Technik und Fig. 2 und 4 zeigen entsprechende Prüfstände nach der vorliegenden Erfindung.

Fig. 1 illustriert das bekannte, oben angesprochene Drehzahldifferenz-Verfahren in der einfachsten Variante an einem Motorprüfstand. Der Verbrennungsmotor J1 ist über eine Verbindungswelle 1 mit einem Belastungsaggregat J2 verbunden, welches sowohl als Bremse als auch als Antrieb (zur Simulation des Schubbetriebes) wirken kann. Über Leitungen 2 und 3 werden die momentanen Drehzahlen n1 (des Verbrennungsmotors J1) und n2 (des Belastungsaggregates J2) an eine Differenzbildungseinheit 4 gelegt, die über die Leitung 5 die Drehzahldifferenz $\Delta$n einer Multipliziereinheit 6 zuführt. In dieser Multipliziereinheit 6 wird die Drehzahldifferenz $\Delta$n mit einem Korrektur- bzw. Dämpfungsfaktor d multipliziert und das Produkt über eine Leitung 7 einer Verknüpfungseinheit 8 zugeführt. Über die Leitung 9 liegt der Momentensollwert (z.B. vom Drehzahlregler des Belastungsaggregats) an der Verknüpfungseinheit 8 an. Das um die dämpfende Komponente korrigierte Moment bzw. das entsprechende Signal wird über die Leitung 10 dem Belastungsaggregat J2 zugeführt, welches damit eben nicht genau den über die Leitung 9 gelieferten, an sich gewünschten Drehmoment-Sollwertverlauf erzeugt sondern einen davon insbesonders in den Änderungsphasen geringfügig abweichenden Drehmomentverlauf, wobei die Abweichung, die zur Bedämpfung des Systems erforderlich ist, das Korrekturmoment, welches dem Sollmoment überlagert ist, darstellt.

Gemäß Fig. 2 unterscheidet sich eine Fig. 1 entsprechend ebenfalls für die einfachste Anwendung am Motorprüfstand konzipierte Anordnung nach der vorliegenden Erfindung vom Stande der Technik nun grundsätzlich dadurch, daß hier das über die Welle 1 übertragene Drehmoment in einer Meßeinheit M bestimmt und über die Leitung 11 einer Differenziereinheit 12 zugeführt wird. Die hier erhaltene zeitliche Ableitung des Momentes, die der Verspannungsänderung in der Welle 1 entspricht, wird über Leitung 13 wiederum der Multipliziereinheit 6 zugeführt und gelangt verknüpft mit dem Korrekturfaktor d/c über die Leitung 7 wiederum an die Verknüpfungseinheit 8 und wird dort mit dem über die Leitung 9 angelieferten Momentensollwert verknüpft. Über die Leitung 10 erfolgt wiederum die Zuführung des bedämpften Sollwertsignals an das Belastungsaggregat J2.

Die Ausführung nach Fig. 2 (bei der ebenso wie bei der Ausführung nach Fig. 1 entsprechend dem Stande der Technik) kein Glied mit variabler oder unbekannter Übersetzung zwischen Antriebs- und Belastungsaggregat (J1, J2) angeordnet ist, hat gegenüber Fig. 1 den Vorteil, daß für die Bedämpfung der uncharakteristischen Systemschwingungen nur eine Drehmomentmessung an der Verbindungswelle 1 erforderlich ist, die bei derartigen Prüfständen zumeist ohnedies vorgenommen wird, und daß die gemäß Fig. 1 möglichst unmittelbar an den Aggregaten J1 und J2 zu bestimmenden Drehzahlen n1 und n2 nicht benötigt werden.

Weitaus größere und grundsätzlichere Vorteile der vorliegenden Erfindung gegenüber dem Stande der Technik ergeben sich bei Vergleich der Anordnungen nach den Fig. 3 und 4. Es handelt sich in beiden Fällen um schematisch dargestellte Antriebsstrang-Prüfstände mit drei elektrischen Antriebs- bzw. Belastungsaggregaten J1, J2 und J3, wobei das Aggregat J1 den Verbrennungsmotor des Fahrzeuges und J2 und J3 die Antriebsräder samt Rückwirkung von der Fahrbahn simuliert. Mit I ist ein zwischen dem Antriebsaggregat J1 und einem Differential 14 eingeschaltetes Getriebe bezeichnet, welches als Schaltgetriebe aber auch als Automatikgetriebe ausgebildet sein kann. Die jeweiligen Verbindungswellen sind mit 16, 17, 18 und 19 bezeichnet.

Gemäß Fig. 3 werden beim Stand der Technik an den Aggregaten J1, J2 und J3 Momentandrehzahlen n1, n2 und n3 ermittelt, aus denen in Differenzbildungseinheiten 4 jeweils Differenzdrehzahlen (zwischen n1 und n2, zwischen n1 und n3, zwischen n2 und n3) bestimmt werden. Die Dämpfung von Mehrmassenschwingungen zwischen J2 und J3 (auf gleichem Drehzahlniveau laufend) erfolgt dann weiters wie in Fig. 1 beschrieben.

Die Ermittlung des Korrekturmomentes für die Dämpfung von Mehrmassensystem-Schwingungen zwischen den Aggregaten J1 und J2 einerseits bzw. J1 und J3 andererseits ist zufolge des Getriebes I zwischen den Verbindungswellen 16 und 17 etwas schwieriger. Hier muß nun der Drehzahlwert von n2 bzw. n3 in einer zusätzlichen Multiplikationseinheit 15 mit dem jeweiligen Gesamt-Übersetzungsverhältnis i (Eintriebsdrehzah) durch Abtriebsdrehzahl) korrigiert werden bevor er der jeweiligen Differenzbildungseinheit 4 zugeführt wird. Das dem Dämpfungsmoment entsprechende Signal nach den Multipliziereinheiten 6' kann dem Aggregat J1 direkt zugeführt werden - den Aggregaten J2 und J3 wird es über eine Dividiereinheit 20 rückgeführt, die wiederum das Übersetzungsverhältnis i (nun als 1/i) berücksichtigt. Durch das erforderliche Übersetzungsverhältnis i bzw. die entsprechenden Korrektureinheiten wird diese Anordnung nach dem Stande der Technik bereits relativ kompliziert und ist für den Fall, daß das Übersetzungsverhältnis i während der Prüfung sich dynamisch ändert (z.B. Automatikgetriebe) nicht oder nur mit aufwendigen zusätzlichen Maßnahmen verwendbar.

Bei der in Fig. 4 dargestellten Anordnung nach der vorliegenden Erfindung ist nun analog zur einfachsten Anwendung gemäß Fig. 2 wiederum nur im Bereich der Verbindungswelle jedes der Aggregate J1, J2 und J3 eine Meßeinheit (M1, M2, M3) für das Drehmoment erforderlich, welche je für sich mit einer Differenziereinheit 12 in Verbindung steht und deren Signal in einer nachfolgenden Multipliziereinheit 6 mit dem Dämpfungs- bzw. Korrekturfaktor d/c korrigiert und sodann als Dämpfungsmoment zum jeweiligen Aggregat J1, J2, J3 rückgeführt wird (die Verknüpfungseinheit 8 gemäß Fig. 2 zur Verknüpfung mit den jeweiligen Momentensollwerten ist hier nicht dargestellt).

Der große Vorteil ist hier gegenüber Fig. 3 darin zu sehen, daß das Getriebe I mit seinem Übersetzungsverhältnis i überhaupt nicht weiter in die Korrektur bzw. Dämpfung eingeht, sodaß abgesehen von einem relativ geringen apparativem Aufwand auch ohne weiteres moderne Getriebe bzw. Komponenten mit unbekannten bzw. sich während der Prüfung ändernden Übersetzungsverhältnissen geprüft werden können.

**Patentansprüche**

1. Verfahren zum Prüfen zumindest einer rotierenden Komponente (J1, I, 1, 14, 16 - 19) eines Fahrzeug-Antriebsstranges auf einem Prüfstand, wobei die zu prüfende Komponente (J1, I, 1, 14, 16 - 19) ein- und/oder abtriebsseitig mit je mindestens einem angekoppelten, aktiven und regelbaren Antriebs- und/oder Belastungsaggregat (J1, J2, J3) versehen ist, welche Aggregate (J1, J2, J3) zusammen mit den Elastizitäten und Massen der dazwischenliegenden Elemente ein schwingfähiges Mehrmassensystem bilden, zu dessen aktiver Dämpfung die durch die Schwingungen verursachten Relativverdrehungen der angekoppelten Aggregate (J1, J2, J3) zur Ermittlung von Korrekturmomenten herangezogen werden, welche den Aggregaten (J1, J2, J3) aufgeschaltet werden, **dadurch gekennzeichnet, daß** zur Bestimmung der durch die Mehrmassensystem-Schwingungen verursachten Relatiwerdrehung der Aggregate (J1, J2, J3) das an bzw. in deren Verbindungswelle (1, 16 - 19) gemessene Drehmoment (M, M1, M2, M3) differenziert wird und daß dieses die Verspannungsänderung darstellende differenzierte Signal (dM/dt) mit einem Dämpfungsfaktor (d/c) multipliziert und dem Drehmomentsollwert des jeweiligen Aggregates als Korrekturwert aufgeschaltet wird.

2. Vorrichtung zur Durchführung des Verfahrens nach Anspruch 1, mit zumindest einer ein- und/oder abtriebsseitig mit je mindestens einem angekoppelten aktiven und regelbaren Antriebs- und/oder Belastungsaggregat (J1, J2, J3) versehenen zu prüfenden Komponente (J1, I, 1, 14, 16 - 19) und einer Korrektureinheit, welche eingangsseitig mit einer Meßanordnung zur Ermittlung der durch Mehrmassensystem-Schwingungen verursachten Relatiwerdrehungen der Aggregate verbunden ist und daraus Stellsignale für Korrekturmomente ermittelt, welche über eine ausgangsseitige Verbindung mit dem jeweiligen Aggregat (J1, J2, J3) diesem aufgeschaltet sind, **dadurch gekennzeichnet, daß** die Meßanordnung zur Ermittlung der Relatiwerdrehung einen Drehmomentsensor (M, M1, M2, M3) an bzw. in der Verbindungswelle (1, 16 - 19) des jeweiligen Aggregates (J1, J2, J3) aufweist, welcher mit einer Differenziereinheit (12) in der Korrektureinheit zur Ermittlung der Verspannungsänderung in Verbindung steht, welche in einer Multiplikationseinheit (6) der Korrektureinheit mit einem Dämpfungsfaktor (d/c) korrigiert wird und als Stellsignal für das Korrekturmoment dient.

EP 1 333 268 A2

Korrekturfaktor

$\Delta n$

X

4

6

5

2

3

7

Verbrennungsmotor

Belastungsmaschine

n1

n2

J1

J2

$C_{Welle}$

1

10

8

9

Momentensollwert

FIG. 1

FIG. 2

FIG. 3

EP 1 333 268 A2

Korrekturfaktor

1/i

4

6'

X

20

X

Korrekturfaktor

15

X

i

n2

J2

Belastungsmaschine

19

Antriebsmaschine

n1

J1

I

16

17

14

18

4

6

X

i

15

X

J3

Belastungsmaschine

n3

4

X

6'

20

X

Korrekturfaktor

1/i

FIG. 4